**Europäisches Patentamt**

**European Patent Office**

**Office européen des brevets**

(19)

(11) Veröffentlichungsnummer : **0 362 524 B1**

## (12) EUROPÄISCHE PATENTSCHRIFT

(45) Veröffentlichungstag der Patentschrift :
**25.03.92 Patentblatt 92/13**

(51) Int. Cl.$^5$ : **B60R 21/13, B60J 7/20**

(21) Anmeldenummer : **89115146.6**

(22) Anmeldetag : **17.08.89**

(54) **Cabriolet mit einem schwenkbar gelagerten Überrollbügel.**

(30) Priorität : **08.09.88 DE 3830514**

(43) Veröffentlichungstag der Anmeldung :
**11.04.90 Patentblatt 90/15**

(45) Bekanntmachung des Hinweises auf die
Patenterteilung :
**25.03.92 Patentblatt 92/13**

(84) Benannte Vertragsstaaten :
**DE FR GB IT**

(56) Entgegenhaltungen :
**DE-C- 3 410 676**
**DE-C- 3 438 739**

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Ball, Wilfried
Breslauerstrasse 24
W-8312 Dingolfing (DE)**

EP 0 362 524 B1

Anmerkung : Innerhalb von neun Monaten nach der Bekanntmachung des Hinweises auf die Erteilung
des europäischen Patents kann jedermann beim Europäischen Patentamt gegen das erteilte europä-
ische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patent-
übereinkommen).

Jouve, 18, rue Saint-Denis, 75001 PARIS

## Beschreibung

Die Erfindung bezieht sich auf einen Cabriolet der im Oberbegriff des Patentanspruchs 1 genannten und aus der DE-PS 34 10 676 hervorgehenden Art.

Der in dieser Druckschrift offenbarte Überrollbügel ist am Fahrzeugaufbau hinter den Vordersitzen schwenkbar gelagert, wobei der querverlaufende Abschnitt des Überrollbügels in dessen etwa waagrechter Ruhestellung im Bereich des Verdeckkastendeckels liegt. Hierdurch wird bei zurückgeklapptem Verdeck die optische Wirkung des Fahrzeugs störend beeinflußt.

Aufgabe der Erfindung ist es daher, bei einem Cabriolet der im Oberbegriff des Patentanspruchs 1 genannten Art den Verdeckkastendeckel derart auszubilden, daß bei zurückgeklapptem Verdeck und sich in Ruhestellung befindendem Überrollbügel durch diesen die optische Wirkung des Fahrzeugs kaum beeinträchtigt wird.

Zur Lösung der Aufgabe sind die im kennzeichnenden Teil des Patentanspruchs 1 dargelegten Merkmale vorgesehen.

Da der Verdeckkastendeckel erfindungsgemäß zweiteilig ausgebildet ist, wird der Überrollbügel in seiner Ruhestellung vom Bügeldeckelteil des Verdeckkastendeckels überdeckt, so daß er vorteilhafterweise unsichtbar untergebracht ist und darüber hinaus auch nicht die Sicht der Insassen und die optische Wirkung des Fahrzeugs beeinträchtigt. Dabei kann die erfindungsgemäße Überdeckung des Überrollbügels in verhältnismäßig einfacher und kostengünstiger Weise vorgesehen werden. Schließlich ist auch die Überdeckung des Überrollbügels kaum störanfällig im Betriebseinsatz.

Der zweiteilig ausgebildete Verdeckkastendeckel besteht aus einem Bügeldeckelteil und einem Aufnahmedeckelteil. Dabei kann nur dieser an seinen rückwärtigen Randbereich am Fahrzeugaufbau angelenkt sein oder es sind beide Deckelteile zusammen an ihren vorderen Randbereichen am Fahrzeugaufbau angelenkt; in ihrer Ruhestellung sind die beiden Deckelteile schließlich lösbar verriegelt (Merkmale des Patentanspruchs 2).

Der Bügeldeckelteil ist im Bereich der Lagerstelle des Überrollbügels mit diesem verbunden, wobei der Überrollbügel zusammen mit dem Aufnahmedeckelteil über koaxiale Lagerzapfen in einem fahrzeugaufbaufesten Lager angelenkt sind (Merkmale des Patentanspruchs 3).

Nach einer weiteren Ausführungsart kann auch der Aufnahemdeckelteil und der mit dem Bügeldeckelteil verbundene Überrollbügel über querverlaufende, an ihrem vorderen Randbereich vorgesehene Lagerzapfen in einer fahrzeugaufbaufesten Lagergabel angeordnet sein (Merkmale des Patentanspruchs 4).

Der Aufnahmedeckelteil trägt ferner an seiner Unterseite eine Verriegelungsvorrichtung, deren Riegel in den Bügeldeckelteil verrastend eingreift, während der Überrollbügel im Gefahrenfall - zweckmäßigerweise ausgelöst durch eine Sensorsteuerung - vom Riegel zur Verschwenkung durch eine Verlagerungseinrichtung in seine Wirkstellung freigegeben wird. Dabei kann als Verlagerungseinrichtung eine aus zwei aneinander angelenkten Längsteilen bestehende Stützstrebe mit an einer Lagerstelle vorgesehener Schenkelfeder, ein druckmittelbeaufschlagter Hubzylinder oder auch ein Luftsack dienen, der sich im Gefahrenfall durch eine pyrotechnische Einrichtung entfaltet (Merkmale der Patentansprüche 5 bis 7).

Ein Ausführungsbeispiel der Erfindung ist in der Zeichnung dargestellt und wird im folgenden erläutert. Es zeigt:

Figur 1 eine perspektivische Darstellung des Mittelbereichs eines Cabriolets mit zurückgeklapptem Verdeck und in Wirkstellung verschwenktem Überrollbügel,

Figur 2 eine Stirnansicht des Überrollbügels in Wirkstellung, wobei dieser und der Aufnahmedeckelteil in an ihren freien Enden liegenden, fahrzeugaufbaufesten Lagern angelenkt sind,

Figur 3 eine Teildraufsicht der in Figur 2 dargestellten Lagerstelle,

Figur 4 eine Stirnansicht des Überrollbügels in Ruhestellung, der mit dem Aufnahmedeckelteil von einer Lagergabel aufgenommen ist, wobei dieser an seinem rückwärtigen Randbereich am Fahrzeugaufbau angelenkt ist,

Figur 5 eine Teildraufsicht des von der Lagergabel aufgenommenen Überrollbügels mit Aufnahmedeckelteil,

Figur 6 einen durch einen Luftsack in Wirkstellung verschwenkten Überrollbügel.

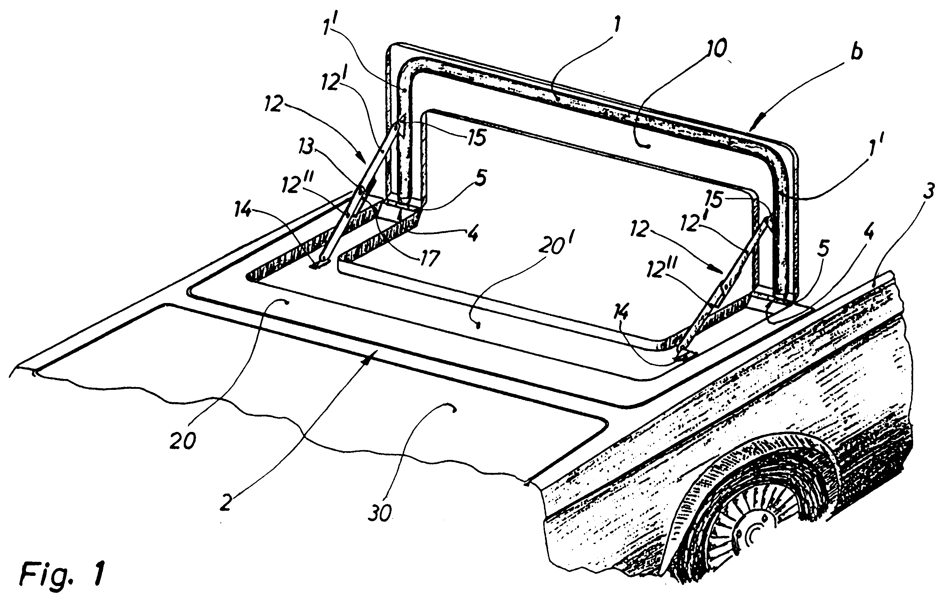

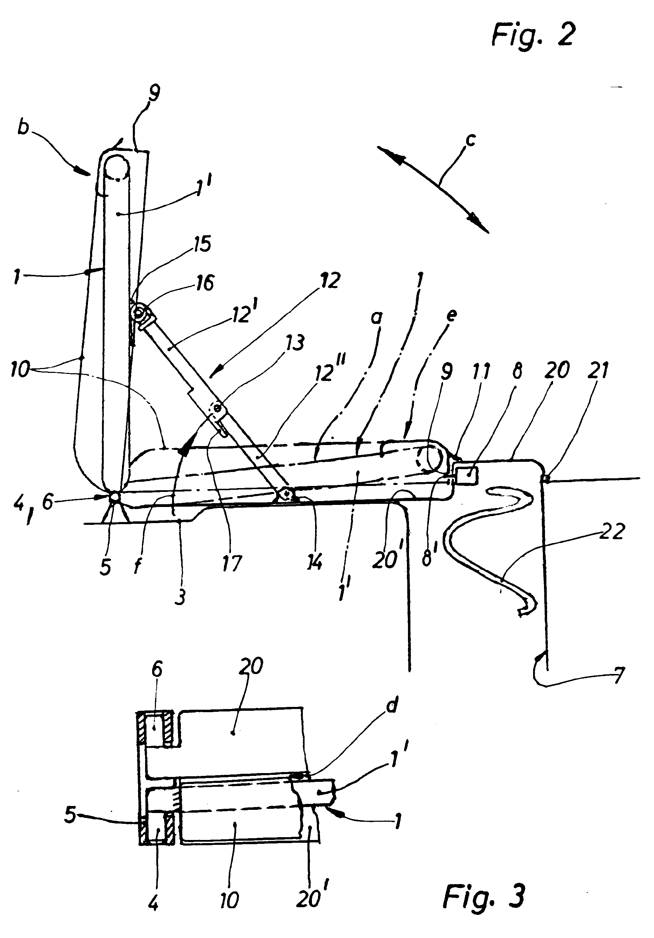

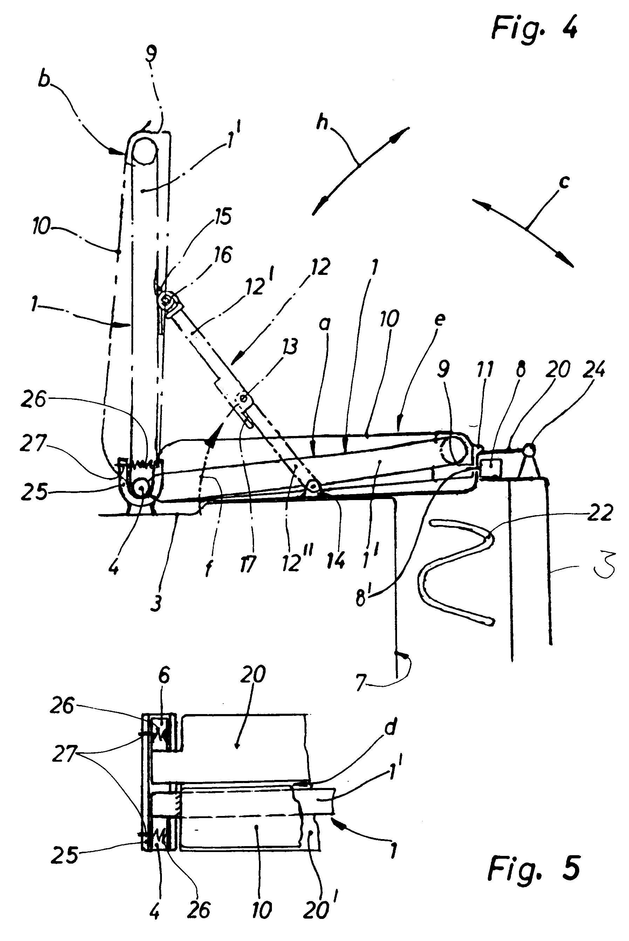

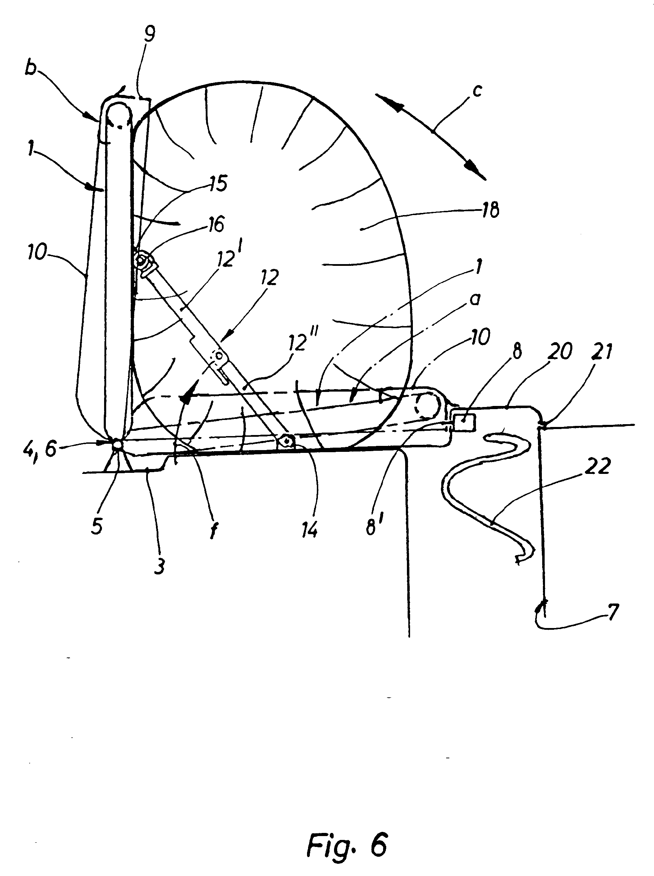

Der in den Figuren 1 und 2 dargestellte, U-förmige Überrollbügel 1 eines Cabriolets ist im Bereich von dessen Verdeckkastendeckel 2 am Fahrzeugaufbau 3 angelenkt, wobei der Verdeckkastendeckel 2 an einen Gepäckraumdeckel 30 angrenzt. Dabei besteht der den Verdeckkasten 7 abdeckende Verdeckkastendeckel 2 aus einem Aufnahmedeckelteil 20 und einem Bügeldeckelteil 10, die jeweils U-förmig gestaltet sind; dieser ist in seiner Ruhestellung e vom Aufnahmedeckelteil 20 umgeben. Damit der Überrollbügel 1 in seiner Ruhestellung a (in den Figuren 2 und 6 mit strichpunktierten und in Figur 4 mit durchgezogenen Linien dargestellt) nicht die optische Wirkung des Cabriolets beeinträchtigt, ist er vom Bügeldeckelteil 10 überdeckt und mit diesem unlösbar verbunden.

Bei der in den Figuren 1 bis 3 dargestellten Ausführungsart sind an den freien Enden der beiden Schenkel 1′ des Überrollbügels 1 einander zugewandte Lagerzapfen 4 ausgebildet, die in einem in einer Fahrzeugquerachse verlaufenden und am Fahrzeugaufbau 3 angebrachten Lager 5 drehbar gelagert sind. Ferner ist in dem der Fahrzeugaußenseite zugewandten Abschnitt des Lagers 5 ein am freien Endabschnitt des Aufnahmedeckelteils 20 angebrachter Lagerzapfen 6 drehbar gelagert, der koaxial zum Lagerzapfen 4 verläuft. Der den Bügeldeckelteil 10 tragende Überrollbügel 1 und der Aufnahmedeckelteil 20 sind derart in den beiden Lagern 5 schwenkbar gelagert, daß zwischen den einander zugewandten Längskanten von Bügeldeckelteil 10 und Aufnahmedeckelteil 20 ein Luftspalt d besteht. Somit sind die beiden Deckelteile unabhängig voneinander in den Lagern 5 in den Richtungen des Doppelpfeils c schwenkbar gelagert (Figur 3).

Wie in Figur 2 ersichtlich, ist an der Unterseite des Aufnahmedeckelteils 20 im Mittelbereich von dessen Breitenerstreckung eine Verriegelungsvorrichtung 8 angeordnet, deren Riegel 8′ in eine Ausnehmung 9 des Bügeldeckelteils 10 in dessen Ruhestellung e verrastend eingreift, so daß dieser hierbei rüttelsicher gehalten ist. Eine am Außenrand des Bügeldeckelteils 10 angebrachte Dichtung 11 liegt dabei abdichtend am Aufnahmedeckelteil 20 an. An diesem ist ferner einstückig und abgestuft ein innenliegendes Tragteil 20′ ausgebildet, das sich, wie Figur 1 zeigt, bis zu den Lagern 5 erstreckt. Zum Verlagern des Überrollbügels 1 von dessen Ruhestellung a in die Wirkstellung b dienen bei der Ausführungsart nach Figur 2 zwei Stützstreben 12, deren etwa gleich lange Längsteile 12′ und 12″ über einen Schwenkbolzen 13 aneinander angelenkt sind. Ferner ist das Längsteil 12″ jeweils an einem Lagerauge 14 des Tragteils 20′ angelenkt, während das Längsteil 12′ jeweils an einem am Schenkel 1′ des Überrollbügels 1 vorgesehenen Lagerauge 15 schwenkbar gelagert ist. An diesem befindet sich ferner eine Schenkelfeder 16, die mit einer solchen Vorspannung angebracht ist, daß der Überrollbügel 1 durch deren Wirkung nach Freigabe des Bügeldeckelteils 10 - wie im folgenden erläutert wird - in seine Wirkstellung b verschwenkt wird, wobei die Stützstreben 12 in Pfeilrichtung f verschwenkt werden. Durch einen vom Längsteil 12′ abstehenden und mit dem Längsteil 12″ zusammenwirkenden Anschlag 17 wird dabei deren Schwenkbewegung begrenzt. Schließlich liegt das Tragteil 20′ im Bereich des Lagerauges 14 auf dem Fahrzeugaufbau 3 auf, so daß es bei Belastung des Überrollbügels 1 kaum durchgebogen wird.

Wie in Figur 6 ersichtlich, kann die Einrichtung zum Verlagern des Überrollbügels 1 in seine Wirkstellung b auch aus einem Luftsack 18 bestehen, der in Ruhestellung a des Überrollbügels 1 zwischen diesem und dem Fahrzeugaufbau 3 liegt und sich im Gefahrenfall über eine nicht gezeigte pyrotechnische Einrichtung entfaltet, so daß der Überrollbügel 1 in seine Wirkstellung b verschwenkt wird. In dieser muß der Überrollbügel 1 jedoch von den Stützstreben 12 abgestützt werden, wobei diese zusätzlich mit den Schenkelfedern 16 versehen sein können. Natürlich können auch nicht dargestellte druckmittelbeaufschlagte Hubzylinder oder dergleichen als Verlagerungseinrichtung dienen.

Falls sich der Cabriolet aufgrund eines Unfalls überschlägt, wird durch eine nicht dargstellte Sensorsteuerung der Riegel 8′ der Verriegelungsvorrichtung 8 zurückgezogen, so daß der Bügeldeckelteil 10 freigegeben und damit der Überrollbügel 1 durch die Wirkung der Schenkelfedern 16, des sich entfaltenden Luftsacks 18 (dessen pyrotechnische Einrichtung gleichzeitig sensorgesteuert gezündet wird) oder durch die Wirkung des druckmittelbeaufschlagten Hubzylinders in seine Wirkstellung b verschwenkt wird. Dabei verbleibt der Aufnahmedeckelteil 20 in der in den Figuren 1 bis 6 dargestellten Ruhelage, in der er über eine nicht dargestellte Einrichtung mit dem Fahrzeugaufbau 3 unter Zwischenlage einer Dichtung 21 verrastet ist. Wenn sich das Cabriolet nicht mehr in einer annormalen Lage befindet, wird der Überrollbügel 1 und damit der Bügeldeckelteil 10 in die Ruhestellung a zurückgeschwenkt und schließlich der Bügeldeckelteil 10 über den Riegel 8′ der Verriegelungsvorrichtung 8 mit dem Aufnahmedeckel 20 verrastet.

Für das Entfalten des in zurückgeklapptem Zustand dargestellten Verdecks 22 wird der Aufnahmedeckelteil 20 nach Lösen seiner Verriegelung samt Überrollbügel 1 und Bügeldeckelteil 10 nach vorne hochgeschwenkt, so daß das Verdeck 22 aus dem Verdeckkaste 7 verlagert und in seine nicht dargestellte Schließstellung entfaltet werden kann. Daraufhin wird der Aufnahmedeckelteil 20 wiederum zurückgeschwenkt und mit dem Fahrzeugaufbau 3 verrastet, wobei sich der Überrollbügel 1 und der Bügeldeckelteil 10 in der Ruhestellung a bzw. e befinden (in Figur 2 mit strichpunktierten Linien und in Figur 4 mit durchgezogenen Linien dargestellt). Der Überrollbügel 1 ist somit auch bei geschlossenem Verdeck 22 innerhalb diesem in einem Gefahrenfall in vollkommen gleichartiger Weise wie vorstehend dargelegt funktionsfähig.

Der in den Figuren 4 und 5 dargestellte Überrollbügel 1 wird im Gefahrenfall mit dem Bügeldeckelteil 10 vollkommen gleichartig wie vorstehend bei den Figuren 1, 2 und 6 erörtert über die Stützstreben 12 oder dergleichen von der Ruhestellung a in die Wirkstellung b und von dieser zurück verlagert (Richtungen des Doppelpfeils c), daher wird im folgenden lediglich die gegenüber Figur 2 andersartige Schwenklagerung des Überrollbügels 1 und des Aufnahmedeckelteils 20 geschildert. Der Aufnahmedeckelteil 20 ist an seinem rückwärtigen Rand über ein in einer Fahrzeugquerachse verlaufendes Schwenklager 24 am Fahrzeugaufbau 3 in den Richtungen des Doppelpfeils h schwenkbar gelagert. Dabei kann das Schwenklager 24 über die ganze

3

Breite des Aufnahmedeckelteils 20 verlaufen oder auch nur abschnittsweise vorgesehen sein. Der den Bügeldeckelteil 10 tragende Überrollbügel 1 und der Aufnahmedeckelteil 20 sind über die an ihren vorderen, freien Endabschnitten ausgebildete und koaxial zueinander verlaufende Lagerzapfen 4 und 6 jeweils in einer nach oben offenen und am Fahrzeugaufbau 3 angebrachten Lagergabel 25 in den Richtungen des Doppelpfeils c schwenkbar gelagert; die beiden Lagergabeln 25 verlaufen dabei in einer Fahrzeugquerachse. Damit die Lagerzapfen 4 und 6 nach Anordnung in der Lagergabel 25 beim Verschwenken von Überrrollbügel 1 und Aufnahmedeckelteil 20 nicht nach oben herausgleiten können, ist an den außenliegenden Endabschnitten jeweils eine von einer Druckfeder 26 belastete Sicherungseinrichtung 27 angeordnet. Diese werden beim Einführen der Lagerzapfen 4 und 6 in das Gabelmaul der Lagergabel 25 gegen die Wirkung der Druckfeder 26 zurückverlagert und überdecken schließlich durch deren Wirkung in ihrer Ruhelage die Lagerzapfen 4 und 6.

Zum Entfalten des Verdecks 22 von dessen in Figur 4 gezeigter, zurückgeklappter Lage in die nicht dargestellte, entfaltete Lage wird der Aufnahmedeckelteil 20 mit Überrollbügel 1 nach Freigabe der Lagerzapfen 4 und 6 durch die Sicherungseinrichtung 27 in die nach oben und hinten gerichtete Richtung des Doppelpfeils h verschwenkt, das Verdeck 22 vom Verdeckkasten 7 nach außen gezogen und schließlich mit seinem untenliegenden, entsprechend ausgebildeten Rand am Fahrzeugaufbau 3 angeordnet. Daraufhin wird der Aufnahmedeckelteil 20 in die abwärts gerichtete Richtung des Doppelpfeils h verschwenkt, bis schließlich die Lagerzapfen 4 und 6 von der Lagergabel 25 aufgenommen und durch die Sicherungseinrichtung 27 gesichert sind. Somit ist auch bei dieser Ausführungsart der Überrollbügel 1 bei geschlossenem Verdeck 22 innerhalb diesem in einem Gefahrenfall funktionsfähig.

## Patentansprüche

1. Cabriolet mit einem schwenkbar gelagerten Überrollbügel, der im Gefahrenfall über mindestens eine Verlagerungseinrichtung von einer rückgeschwenkten, etwa in der Ebene eines Verdeckkastendeckels liegenden Ruhestellung in eine etwa lotrechte Wirkstellung verlagerbar ist, dadurch gekennzeichnet, daß der Überrollbügel (1) von dem wenigstens zweiteilig ausgebideten Verdeckkastendeckel (2) aufgenommen und in Ruhestellung (a) von einem der Teile (Bügeldeckelteil 10) des Verdeckkastendeckels überdeckt ist.

2. Cabriolet nach Anspruch 1, dadurch gekennzeichnet, daß der Verdeckkastendeckel (2) aus einem Bügeldeckelteil (10) und einem Aufnahmedeckelteil (20) besteht, wobei dieser an seinem rückwärtigen Randbereich am Fahrzeugaufbau (3) schwenkbar gelagert ist oder der Bügeldeckelteil und der Aufnahmedeckelteil sind zusammen an ihren vorderen, freien Endabschnitten am Fahrzeugaufbau angelenkt, während die beiden Teile ferner in ihrer Ruhestellung lösbar verriegelt sind.

3. Cabriolet nach Anspruch 2, wobei die Schwenkachse des Überrollbügels in einer Fahrzeugquerachse verläuft, dadurch gekennzeichnet, daß der Bügeldeckelteil (10) mit dem Überrollbügel (1) verbunden ist und dieser mit an seinen Enden vorgesehenen Lagerzapfen (4) zusammen mit koaxial zu diesen verlaufenden Lagerzapfen (6) des Aufnahmedeckelteils (20) in einem fahrzeugaufbaufesten Lager (5) schwenkbar gelagert sind.

4. Cabriolet nach Anspruch 2, dadurch gekennzeichnet, daß der in seinem rückwärtigen Randbereich über ein Schwenklager (24) am Fahrzeugaufbau (3) angelenkte Aufnahmedeckelteil (20) und der mit dem Bügeldeckelteil (10) verbundene Überrollbügel (1) über jeweils einen querverlaufenden Lagerzapfen (6, 4) von einer fahrzeugaufbaufesten, nach oben offenen Lagergabel (25) ausgenommen sind, wobei diese wenigstens eine federbelastete, die Lagerzapfen überdeckende Sicherungseinrichtung (27) aufweist.

5. Cabriolet nach Anspruch 2, dadurch gekennzeichnet, daß der Aufnahmedeckelteil (20) an seiner Unterseite eine Verriegelungsvorrichtung (8) trägt, deren Riegel (8′) mit dem Bügeldeckelteil (10) in dessen Ruhestellung (e) verrastend zusammenwirkt, während dieser im Gefahrenfall vom Riegel freigegeben und mit dem Überrollbügel (1) über die Verlagerungseinrichtung in die Wirkstellung (b) verschwenkt wird.

6. Cabriolet nach Anspruch 1, dadurch gekennzeichnet, daß die Verlagerungseinrichtung durch eine an jeweils einem Schenkel (1′) des Überrollbügels (1) vorgesehene Stützstrebe (12) gebildet ist, die aus zwei anschlagbegrenzt aneinander angelenkten Längsteilen (12′, 12″) besteht, welche an ihren Endabschnitten an einem mit dem Aufnahmedeckelteil (20) verbundenen Tragteil (20′) bzw. am Überrollbügel angelenkt sind, wobei an dessen Lagerstelle jeweils eine sein Hochschwenken bewirkende Schenkelfeder (16) mit Vorspannung angebracht ist.

7. Cabriolet nach Anpruch 1 und 6, dadurch gekennzeichnet, daß als Verlagerungseinrichtung ein Luftsack (18) dient, der sich im Gefahrenfall über eine pyrotechnische Einrichtung entfaltet, wobei der Überrollbügel (1) in seiner Wirkstellung (b) von den Stützstreben (12) abgestützt wird.

## Claims

1. A cabriolet with a pivotably-mounted roll bar which in an effrergency is movable by at least one displacement device from a rearwardly pivoted inoperative position approximately in the plane of a folding-top box cover and into an approximately vertical operative position, characterised in that the roll bar (1) is received by the folding-top box cover (2), which is in at least two parts, and in the inoperative position (a) is covered by one part (the bar cover bar 10) of the folding-top box cover.

2. A cabriolet according to claim 1, characterised in that the folding-top box cover (2) comprises a bar cover part (10) and a receiving cover part (20), the rear edge region of the receiving cover part being pivotably mounted on the vehicle body (3), or alternatively the bar cover part and the receivin cover part are together pivoted at their front free end portions to the vehicle body, and the two parts are also releasably locked in their inoperative position.

3. A cabriolet according to claim 2, the pivoting axis of the roll bar extending along a transverse axis of the vehicle, characterised in that the bar cover part (10) is connected to the roll bar (1) and pivot pins (4) provided at the ends of the roll bar are pivotably mounted in a bearing (5) secured to the vehicle body, together with pivot pins (6) of the receiving cover part (20), pins (6) being coaxial with pins (4).

4. A cabriolet according to claim 2, characterised in that the receiving cover part (20), the rear edge region of which is pivoted by a bearing (24) to the vehicle body (3), and the roll bar (1) connected to the bar cover part (10) are received via respective transversely-extending pivot pins (6, 4) by an upwardly-open bearing fork (25) secured to the vehicle body, the fork comprising at least one spring-loaded safety device (27) which covers the pivot pins.

5. A cabriolet according to claim 2, characterised in that a locking device (8) is disposed on the underside of the receiving cover part (20) and comprises a bolt (8′) which locks and co-operates with the bar cover part (10) in the inoperative position (e) thereof, whereas in an emergency the part (10) is released by the bolt and, together with the roll bar (1), is pivoted into the operative position (b) by the displacement device.

6. A cabriolet according to claim 1, characterised in that the displacement device comprises a strut (12) provided on each limb (1′) of the roll bar (1) and made up of two longitudinal parts (12′, 12″) pivoted to one another and bounded by an abutment, their end portions being pivoted to the roll bar or to a bearing part (20′) connected to the receiving cover part (20), and a prestressed spring (16) for upward pivoting is disposed at each place where the roll bar is mounted.

7. A cabriolet according to claims 1 and 6, characterised in that the displacement means is an air bag (18) which in an emergency is unfolded by a pyrotechnic device, the roll bar (1) being held in its operative position (b) by the struts (12).

## Revendications

1. Cabriolet avec un arceau de sécurité monté de façon à pouvoir pivoter, qui peut être déplacé en cas de danger par l'intermédiaire d'au moins un dispositif de déplacement, d'une position de repos repliée, située à peu près dans le plan d'un couvercle de coffre à capote, dans une position active sensiblement verticale, cabriolet caractérisé en ce que l'arceau de sécurité (1) est reçu par le couvercle de coffre à capote (2) réalisé au moins en deux parties et en ce que dans la position de repos (a) il est recouvert par une des parties (partie de couvercle d'arceau 10) du couvercle de coffre de capote.

2. Cabriolet selon la revendication 1, caractérisé en ce que le couvercle de coffre de capote (2) se compose d'une partie de couvercle d'arceau (10) et d'une partie de couvercle de logement (20), celui-ci étant fixé à la carrosserie du véhicule (3) en pouvant pivoter sur sa zone de bord arrière ou bien en ce que la partie de couvercle d'arceau et la partie de couvercle de logement sont articulées ensemble sur la carrosserie du véhicule par leurs segments d'extrémité avant libres, tandis que les deux parties sont en outre verrouillées mais détachables dans leur position de repos.

3. Cabriolet selon la revendication 2, dans lequel l'axe de pivotement de l'arceau de sécurité se développe selon un axe perpendiculaire au véhicule, caractérisé en ce que la partie de couvercle d'arceau (10) est liée à l'arceau de sécurité (1) et en ce que celui-ci par des tourillons (4) prévus à ses extrémités en union avec des tourillons (6) coaxiaux à ces derniers de la partie de couvercle de logement (20) sont montés avec pivotement possible dans un coussinet (5) solidaire de la carrosserie.

4. Cabriolet selon la revendication 2, caractérisé en ce que la partie de couvercle de logement (20) articulée dans sa zone de bord arrière sur un coussinet de pivotement (24) fixé à la carrosserie (3) du véhicule et l'arceau de sécurité (1) lié à la partie de couvercle d'arceau (10) sont enlevés respectivement par l'intermédiaire d'un tourillon (6, 4) se développant transversalement, d'un coussinet à fourche (25) ouvert vers le haut solidaire de

5

la carrosserie, celui-ci comportant au moins un dispositif de sécurité (27) chargé par un ressort, recouvrant les tourillons.

5. Cabriolet selon la revendication 2, caractérisé en ce que la partie de couvercle de logement (20) porte sur sa face inférieure un dispositif de verrouillage (8), dont le verrou (8′) agit de concert avec la partie de couvercle d'arceau (10) en la verrouillant dans sa position de repos (e), alors que cette partie en cas de danger est libérée du verrou et pivote avec l'arceau de sécurité (1) dans la position active (b) par l'intermédiaire du dispositif de déplacement.

6. Cabriolet selon la revendication 1, caractérisé en ce que le dispositif de déplacement est constitué d'une entretoise d'appui (12) prévue respectivement sur une branche (1′) de l'arceau de sécurité (1), entretoise qui se compose de deux parties longitudinales (12′, 12″) articulées entre elles avec une butée de limitation, et qui sont articulées sur leurs segments d'extrémités à une partie porteuse (20′) liée à la partie du couvercle de logement (20) ou respectivement à l'arceau de sécurité, pour lequel en son point d'appui un ressort à branches (16) occasionnant son basculement est placé en précontrainte.

7. Cabriolet selon les revendications 1 et 6, caractérisé en ce que comme dispositif de déplacement on utilise un coussin d'air (18), qui se déploie en cas de danger par l'intermédiaire d'un dispositif pyrotechnique, l'arceau de sécurité (1) étant étayé dans sa position active (b) par les entretoises d'appui (12).

Fig. 1

EP 0 362 524 B1

*Fig. 2*

*Fig. 3*

Fig. 4

Fig. 5

Fig. 6